# EUROPEAN PATENT SPECIFICATION

(11) **EP 3 255 609 B1**
(45) Date of publication and mention of the grant of the patent: **24.03.2021**
(21) Application number: 16203543.0
(22) Date of filing: 12.12.2016
(51) Int. Cl.: G06T 7/73, G06T 7/136

(54) **A METHOD OF AUTOMATICALLY IDENTIFYING A SEQUENCE OF MARKING POINTS IN 3D MEDICAL IMAGE**
VERFAHREN ZUR AUTOMATISCHEN IDENTIFIZIERUNG EINER SEQUENZ VON MARKIERUNGSPUNKTEN IN MEDIZINISCHEN 3D-BILDERN
PROCÉDÉ D'IDENTIFICATION AUTOMATIQUE D'UNE SÉQUENCE DE POINTS DE MARQUAGE DANS UNE IMAGE MÉDICALE EN 3D

(30) Priority: 08.06.2016 CN 201610403940
(43) Date of publication of application: 13.12.2017
(73) Proprietor: Tinavi Medical Technologies Co., Ltd., Beijing 100192 (CN)
(72) Inventor: TIAN, Wei, Beijing, Beijing 100192 (CN); LIU, Yajun, Beijing, Beijing 100192 (CN); FENG, Yun, Beijing, Beijing 100192 (CN); LI, Yinyan, Beijing, Beijing 100192 (CN); XU, Jin, Beijing, Beijing 100192 (CN)
(74) Representative: Skov, Anders

(56) References cited:
- LIN QINYONG ET AL: "Real-time automatic registration in optical surgical navigation", INFRARED PHYSICS AND TECHNOLOGY, ELSEVIER SCIENCE, GB, vol. 76, 25 March 2016 (2016-03-25), pages 375-385, XP029540118, ISSN: 1350-4495, DOI: 10.1016/J.INFRARED.2016.03.011
- CHETVERIKOV D ET AL: "The trimmed iterative closest point algorithm", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 3, 11 August 2002 (2002-08-11), pages 545-548, XP010613684, DOI: 10.1109/ICPR.2002.1047997 ISBN: 978-0-7695-1695-0

## Description

### BACKGROUND

### Technical Field

The present invention relates to the field of medical image processing technologies, and in particular, to a method of automatically identifying a sequence of marking points in 3D medical image.

### Related Art

Multiple coordinate systems, e.g., an image coordinate system and a tool coordinate system, exist in a surgical navigation and positioning system. During surgery, the multiple coordinate systems need to be unified under a same coordinate system, and this process is known as registration. In the process of a navigation surgery, registration is an indispensable important constituent part, because only after registration work is completed to enable coordinate systems of various devices in the surgical navigation and positioning system to be unified, subsequent navigation tracking can be performed, and precision of the registration directly affects precision of the entire surgical navigation and positioning system.

There are two methods for registration in the prior art. The first method is based on a surface, and the algorithm of this method is complex and the precision is low, therefore the method is not used commonly; the second method is based on marker points, which implement positioning in a computer-assisted surgical system. Some marker points are directly attached on a surface of a human body, and some marker points are fixed on a positioning tool, where a positioning tool with marker points is collectively called a positioning scale. When marker points on a positioning scale are used for registration, first, the positioning scale and the part of a patient are scanned together by using a three-dimensional X-ray imaging device; then, marker points in the scanned image are extracted and coordinates, in an image coordinate system, of the marker points are obtained; and finally, a one-to-one mapping relationship between the marker points on the positioning tool and the marker points in the image is established by means of a marker point sequence automatic identification algorithm, so that a rotation matrix R and a translation vector T between the tool coordinate system and the image coordinate system can be obtained to complete automatic registration. Lin Qinyong et al. [1] discloses a method for matching skin-adhered markers with their counterparts on intraoperative physical anatomy, and Chetverikov D. et al. [2] discloses a trimmed iterative closest point algorithm.

Currently, a most common method for automatically identifying a marker point sequence is an iterative closest point algorithm. This is a matching method based on the least square method, which can determine a correspondence between point sets of marker points repeatedly and calculate a transformation matrix between two corresponding point sets. It is an algorithm with high registration precision. However, the algorithm has requirements for initial registration locations of scanned point sets, with poor robustness and long calculation time. In addition, the test results show that the matching result is unreliable and be prone to falling into local optimal solutions. In addition, the current positioning marker points of a surgical robot are identified basically based on a bi-planar localization algorithm, and can be automatically identified. However, the algorithm is based on identification of a two-dimensional image, which differs from setting and identification of marker points in a three-dimensional medical X-ray image in processing methods, so the bi-planar localization algorithm cannot be commonly applied to identification of the marker points in the three-dimensional medical X-ray image.

### SUMMARY

With respect to the foregoing problem, the object of the present invention is to provide a method for automatically identifying a marker point sequence in a three-dimensional medical image, which is able to quickly and accurately identify multiple image marker points.

To achieve the foregoing technical object, the present invention employs the following technical solution: a method for automatically identifying a marker point sequence in a three-dimensional medical image, characterized by including the following steps: 1) selecting a calibration scale having at least four marker points, and reading information about the selected calibration scale, where the information about the calibration scale includes marker point information of the calibration scale and information about whether to group the marker points; 2) reading a DICOM image that includes the calibration scale and the marker points and is scanned by a CBCT or CT; 3) performing threshold segmentation on the DICOM image, and performing extraction to generate polygonal data; 4) filtering the polygonal data according to the read information about the calibration scale to obtain image marker points in the DICOM image; 5) calculating the distance between each two image marker points in the image respectively; 6) performing a preliminary match between the obtained image marker points and the scale marker points, and performing filtering and sorting of the image marker points to obtain the scale marker points vector and the corresponding one-to-one image marker points vector; 7) calculating a rotation matrix between the scale marker points vector and the image marker points vector, and calculating a residual error according to the calculation result of the rotation matrix; and 8) determining whether the residual error is less than a target error; if NOT, then going to step 6) to perform filtering and sorting again; if YES, then outputting the scale marker points vector and the corresponding one-to-one image marker points vector of the step 6) as a matching result.

Further, the scale marker points on the calibration scale are defined as two groups, i.e., group A and group B, respectively, so that there are three or more scale marker points in at least one of the group A and the group B, the step (6) of performing a preliminary match between the obtained image marker points and the scale marker points, and performing filtering and sorting of the image marker points to obtain the scale marker points vector and the corresponding one-to-one image marker points vector includes the following contents: 6.1) performing a preliminary match on the group A with a specific process as follows: 6.1.1) creating a triangle with every three of all the scale marker points of the group A, and selecting one of the triangles created by all the scale marker points of the group A as a scale triangle template; 6.1.2) creating an image triangle with every three of the image marker points, and determining whether there is a triangle congruent to the scale triangle template in the image triangles according to the calculated distance between each two image marker points; if NOT, then outputting null and going to step 6.4); if YES, then going to step 6.1.3); 6.1.3) obtaining, according to a correspondence between vertexes, vertexes of the scale triangle template and the image triangle that have been matched respectively, to create a congruent triangle matching point pair as matching marker point pair sequences, and numbering and storing the created matching marker point pair sequences; 6.1.4) selecting a point other than the scale marker points that create the scale triangle template in the group A as a target point, and searching, in the image obtained in the step 2), for an image marker point corresponding to the target point according to the image triangle matching the triangle template; 6.1.5) determining whether there is an image marker point corresponding to the target point; if NOT, then outputting the matching marker point pair sequences stored in the step 6.1.3); if YES, then going to step 6.1.6); 6.1.6) adding the target point and the corresponding image marker point into the matching marker point pair sequences, then numbering and storing them; 6.1.7) determining whether there is a remaining scale marker point in the scale marker points of the group A; if NOT, then outputting all the stored matching marker point pair sequences; if YES, then going to the step 6.1.4); 6.2) performing a preliminary match on the group B according to the identical operation steps with those on the group A in the step 6.1); 6.3) storing all the matching marker points output by the group A and the group B respectively to form the scale marker points vector and the corresponding one-to-one image marker points vector, and storing and outputting them to the step 7); 6.4) determining whether both the group A and the group B output null; if only one of the group A and the group B outputs null, then going to step 6.5); if both output null, then going to step 6.7); 6.5) the operation steps in a case in which the group A does not output null and the group B outputs null being identical with the operation steps in a case in which the group B does not output null and the group A outputs null, both being searching in the image obtained in the step 2), according to the matching marker point pair sequences of the group that does not output null, for an image marker point corresponding to a scale marker point in the group that outputs null, and adding the matching point pairs into the matching marker point pair sequences, and going to step 6.6); 6.6) storing all the matching marker point pair sequences obtained in the step 6.5) respectively to form the scale marker points vector and the corresponding one-to-one image marker points vector, and storing and outputting to the step 7); 6.7) arbitrarily selecting two or more scale marker points in all the scale marker points of the group A and the group B respectively to create a new group C comprising four or more scale marker points; performing a preliminary match on the group C according to the operation steps identical with those on the group A in the step 6.1) or those on the group B in the step 6.2); and storing all the obtained matching marker point pair sequences respectively to form the scale marker points vector and the corresponding one-to-one image marker points vector, and storing and outputting them to the step 7).

Further, in the step 6.5) wherein the operation steps in a case in which the group A does not output null and the group B outputs null are identical with the operation steps in a case in which the group B does not output null and the group A outputs null, both are implemented by means of a secondary matching and specifically comprises the following content: 6.5.1) selecting a pair of congruent triangles in the matching marker point pair sequences of the group that does not output null; 6.5.2) selecting a scale marker point in the group that outputs null as a to-be-matched point, and searching, according to the selected pair of congruent triangles, in the image obtained in the step 2) for an image marker point corresponding to the to-be-matched point; 6.5.3) determining whether there is a image marker point corresponding to the to-be-matched point; if NOT, then going to step 6.5.5); if YES, then going to step 6.5.4); 6.5.4) adding the to-be-matched point and the image marker point corresponding thereto into the matching marker point pair sequences, and numbering and storing them; 6.5.5) determining whether there is a remaining scale marker point in the group that outputs null; if YES, then going to the step 6.5.2) for circulation; if NOT, then outputting all the stored matching marker point pair sequences.

Further, in the step 6.5) wherein the operation steps in a case in which the group A does not output null and the group B outputs null are identical with the operation steps in a case in which the group B does not output null and the group A outputs null, both are implemented by means of a secondary matching and specifically comprises the following content: 6.5.1) selecting a pair of congruent triangles in the matching marker point pair sequences of the group that does not output null as a reference template; 6.5.2) selecting a scale marker point in the group that outputs null as a to-be-matched point, and determining, along with the reference template, whether there is an image marker point corresponding to the to-be-matched point in the image obtained in the step 2); if NOT, then going to step 6.5.4); if YES, then going to step 6.5.3); 6.5.3) adding the to-be-matched point and the image marker point corresponding thereto into the reference template, and adding them into the matching marker point pair sequences, so as to number and store them; 6.5.4) determining whether there is a remaining scale marker point in the group that outputs null; if YES, then going to the step 6.5.2) for circulation; if NOT, then outputting all the stored matching marker point pair sequences.

Further, in step 4), the polygonal data is filtered, and the image marker points in the DICOM image are obtained by means of spherical fitting, spherical determining, and marker point center calculation.

With the foregoing technical solutions, the present invention has the following advantages: (1). since the present invention sets the scale marker points and searches for the image marker points according to the scale marker points, it can quickly and accurately identify multiple image marker points; (2). since the present invention sets a preliminary match, that is, first, using a scale triangle template to search for an image triangle, and then sequentially using a scale marker point as a target point to search for an image marker point matching the target point, it can further improve the speed and accuracy of identifying image marker points; (3). since the present invention, in consideration of specific actual use conditions, always sets a pair of congruent triangles in matching marker point pair sequences of a group that does not output null as a reference template and obtains the image marker points corresponding to the scale marker points of the group that outputs null, it effectively ensures comprehensiveness and accuracy of identifying image marker points; (4). since the present invention, in consideration of specific actual use conditions, initially sets a pair of congruent triangles in the matching marker point pair sequences of the group that does not output null as a reference template and obtains the image marker points corresponding to the scale marker points of the group that outputs null, it effectively ensures comprehensiveness and accuracy of identifying image marker points; and (5). the present invention specifically sets a calibration scale that includes 4 to 12 marker points, where the calibration scale not only satisfies a precision requirement, but also effectively considers time costs; in cooperation with the method for automatically identifying a marker point of the present invention, the calibration scale can implement quick and high-precision automatic registration in a surgical navigation and positioning system, and provide guarantee for improving accuracy of subsequent surgical navigation. In view of the above, the present invention can be widely applied to the field of medical image processing technologies.

### BRIEF DESCRIPTION OF THE DRAWINGS

FIG. 1 is a schematic flowchart of the present invention;
FIG. 2 is a schematic flowchart of a preliminary match of the present invention;
FIG. 3 is a schematic flowchart of an embodiment of the present invention; and
FIG. 4 is a schematic flowchart of another embodiment of the present invention.

### DETAILED DESCRIPTION

The present invention is described in detail below with reference to the accompanying drawings and embodiments.

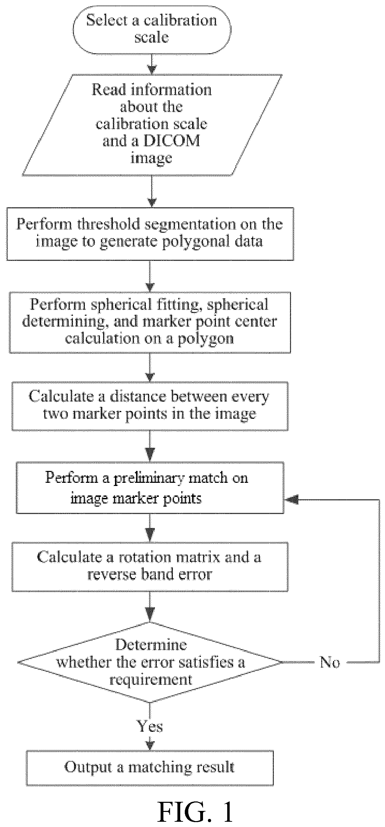

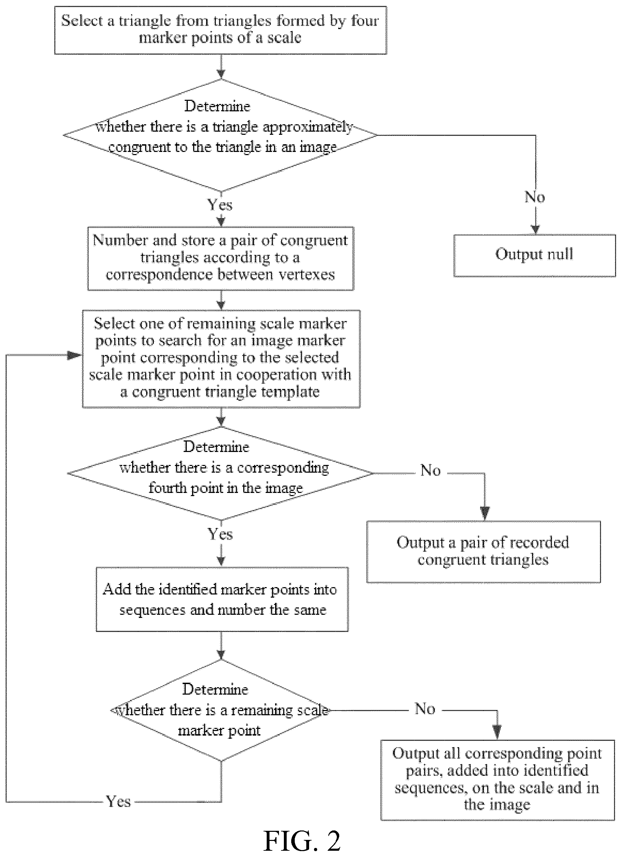

As shown in FIG. 1, a method for automatically identifying a marker point sequence in a three-dimensional medical image of the present invention includes the following steps:
1. selecting a calibration scale including 4 to 12 marker points, and reading information about the selected calibration scale, wherein the information about the calibration scale includes marker point information of the calibration scale and information about whether to group the marker point, and operation steps in a case where the marker points are grouped are identical with operation steps in a case where the marker points are not grouped. This embodiment is illustrated in the case where the marker points are grouped. The marker points on the calibration scale are defined as two groups, i.e., group A and group B respectively, and there are three or more scale marker points in at least one of group A and group B. In this embodiment, the numbers of the marker points in group A and in group B are both four;
2. reading a DICOM image that has the information about the calibration scale selected in the step 1 and is scanned by a CBCT or CT;
3. performing threshold segmentation on the DICOM image obtained in the step 2, and performing extraction to generate polygonal data;
4. according to the information about the calibration scale obtained in the step 2, performing spherical fitting, spherical determining, and marker point center calculation on the polygonal data obtained in the step 3 to filter image marker points in the DICOM image;
5. calculating the distance between each two image marker points in the image marker points obtained in the step 4;
6. as shown in FIG. 2, performing a preliminary match between the image marker points obtained in the step 4 and the scale marker points, and performing filtering and sorting of the image marker points to obtain a scale marker points vector and a corresponding one-to-one image marker points vector, which specifically includes the following contents:
   (1). performing a preliminary match on the group A with a specific process as follows:
      1). group every three of all the scale marker points of the group A into a triangle, and selecting one of all triangles formed by the scale marker points of the group A as a scale triangle template;
      2). create an image triangle with every three of the image marker points obtained in the step 4, and according to the distance between each two image marker points calculated in step 5, determining whether there is a triangle congruent to the scale triangle template in the step 1) in the image marker points obtained in the step 4; if NOT, then outputting null and going to the step (4); if YES, then going to step 3);
      3). obtaining, according to a one-to-one correspondence between vertexes, vertexes of the scale triangle template and the image triangle that have been matched respectively, to create a pair of congruent triangle matching point pairs as matching marker point pair sequences, and numbering and storing the created matching marker point pair sequences;
      4). selecting a point other than the scale marker points that create the scale triangle template in the group A as a target point, and searching, in the image obtained in the step 2, for an image marker point corresponding to the target point according to the image triangle matching the triangle template;
      5). determining whether there is an image marker point corresponding to the target point in the image marker points obtained in the step 4; if NOT, then outputting the matching marker point pair sequences stored in the step 3); if YES, then going to step 6);
      6). adding the target point and the image marker point corresponding thereto into the matching marker point pair sequences, and numbering and storing them;
      7). determining whether there is a remaining scale marker point in the scale marker points of the group A; if NOT, then outputting all the matching marker point pair sequences stored in the step 6); if YES, then going to the step 4) for circulation;
   (2). performing a preliminary match on the group B according to the identical operation steps with those on the group A in the step (1);
   (3). storing all the matching marker points output by the group A and the group B respectively to form the scale marker points vector and the corresponding one-to-one image marker points vector, and storing and outputting them to the step 7;
   (4). determining whether both the group A and the group B output null; if only one of the group A and the group B outputs null, then going to step (5); if both output null, then going to step (7);
   (5). the operation steps in a case in which the group A does not output null and the group B outputs null being identical with the operation steps in a case in which the group B does not output null and the group A outputs null, both being searching in the image obtained in the step 2, according to the matching marker point pair sequences of the group that does not output null, for an image marker point corresponding to a scale marker point in the group that outputs null, and adding the matching point pairs into the matching marker point pair sequences, and going to step (6); wherein the operation steps can be specifically implemented in the following two implementation manners.

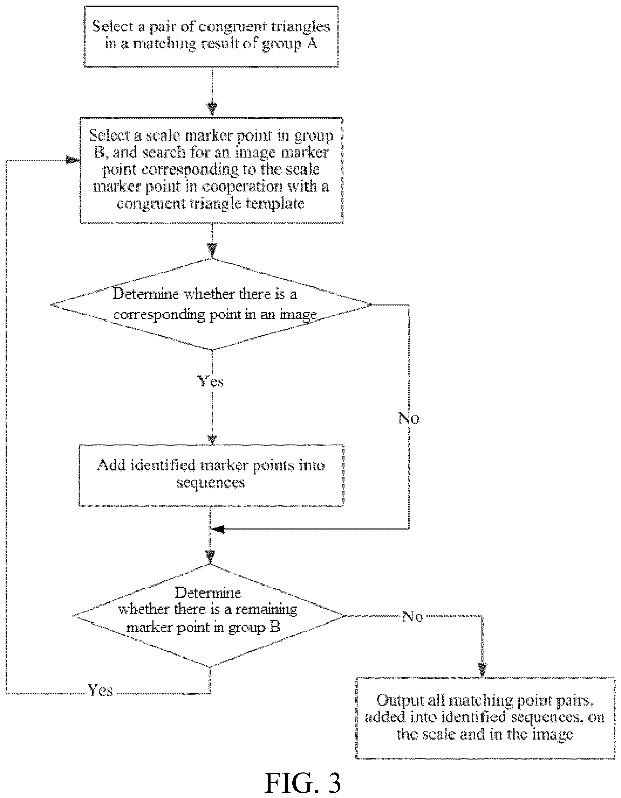

As shown in FIG. 3, one implementation is: always using a pair of congruent triangles in the matching marker point pair sequences of the group that does not output null as a reference template; obtaining, in the image marker points obtained in the step 4, an image marker point corresponding to a scale marker point of the group that outputs null to obtain a matching point pair; and numbering and storing them to form matching marker point pair sequences, until all scale marker points of the group that outputs null are traversed. The following description takes the condition that the group A does not output null and the group B outputs null as an example, which specifically includes the following steps:
1). selecting a pair of congruent triangles in the matching marker point pair sequences of the group A;
2). selecting a scale marker point in the group B as a to-be-matched point, and searching, according to the selected pair of congruent triangles, in the image obtained in the step 2, for an image marker point corresponding to the to-be-matched point;
3). determining whether there is an image marker point corresponding to the to-be-matched point; if NOT, then going to step 5); if YES, then going to step 4);
4). adding the to-be-matched point and the image marker point corresponding thereto into the matching marker point pair sequences, and numbering and storing them;
5). determining whether there is a remaining scale marker point in the group B; if YES, then going to the step 2) for circulation; if NOT, then outputting all the matching marker point pair sequences stored in the step 4).

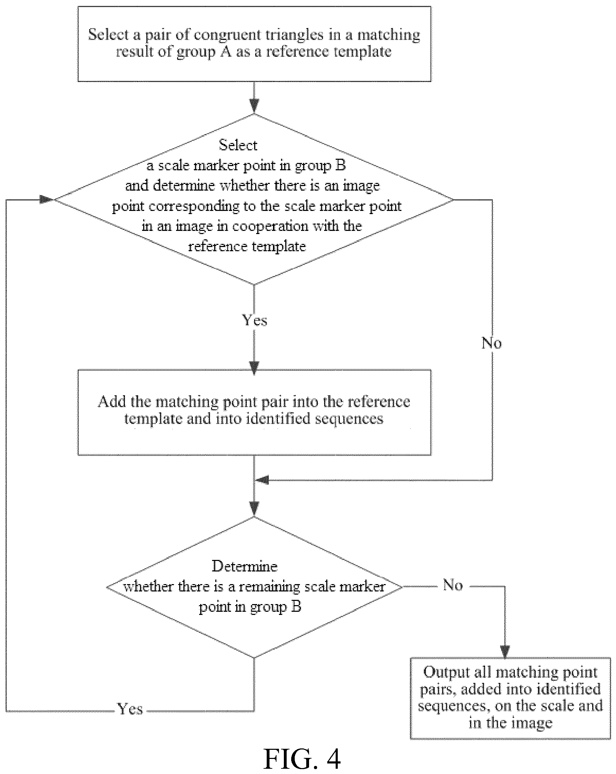

As shown in FIG. 4, the other implementation is: initially using a pair of congruent triangles in the matching marker point pair sequences of the group that does not output null as a reference template, and in a process of obtaining the image marker points, continuously add newly identified matching marker point pairs into the reference template and the matching marker point pair sequences, until all scale marker points of the group that outputs null are traversed. The following description takes the condition that the group A does not output null and the group B outputs null as an example, which specifically includes the following steps:
1). selecting a pair of congruent triangles in the matching marker point pair sequences of the group A as a reference template;
2). selecting a scale marker point in the group B as a to-be-matched point, and determining, in combination with the reference template, whether there is an image marker point corresponding to the to-be-matched point in the image obtained in the step 2; if NOT, then going to step 4); if YES, then going to step 3);
3). adding the to-be-matched point and the image marker point corresponding thereto into the reference template, and adding them into the matching marker point pair sequences, and numbering and storing them;
4). determining whether there is a remaining scale marker point in the group B; if YES, then going to the step 2) for circulation; if NOT, then outputting all the matching marker point pair sequences stored in the step 3);
(6). storing all the matching marker point pair sequences obtained in the step (5) respectively to form the scale marker points vector and the corresponding one-to-one image marker points vector, and storing and outputting them to the step 7;
(7). arbitrarily selecting two or more scale marker points in all the scale marker points of the group A and the group B respectively to create a new group C comprising four or more scale marker points; performing a preliminary match on the group C according to the operation steps identical with those on the group A in the step; and storing all the obtained matching marker point pair sequences respectively to form the scale marker points vector and the corresponding one-to-one image marker points vector, and storing and outputting them to the step 7.
7. calculating a rotation matrix between the scale marker points vector and the image marker points vector, and calculating a residual error according to a calculation result of the rotation matrix; and
8. determining whether the residual error calculated in step 7 is less than a target error; if NOT, then going to step 6 to perform filtering and sorting again; if YES, then outputting the scale marker points vector and the corresponding one-to-one image marker points vector of the step 6 as a matching result.

The foregoing embodiments are merely used for illustrating the present invention, in which the structures, connecting manners, manufacturing processes, and the like of components are variable.
[1] LIN QINYONG ET AL: "Real-time automatic registration in optical surgical navigation", INFRARED PHYSICS AND TECHNOLOGY, ELSEVIER SCIENCE, GB, vol. 76, 25 March 2016 (2016-03-25), pages 375-385, XP029540118, ISSN: 1350-4495, DOI: 10.1016/J.INFRARED.2016.03.011
[2] CHETVERIKOV D ET AL: "The trimmed iterative closest point algorithm", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA, IEEE COMPUT. SOC, US, vol. 3, 11 August 2002 (2002-08-11), pages 545-548, XP010613684, DOI: 10.1109/ICPR.2002.1047997 ISBN: 978-0-7695-1695-0

## Claims

1. A method for automatically identifying a marker point sequence in a three-dimensional medical image, comprising the following steps:
1) selecting a calibration scale comprising at least four marker points, and reading information about the selected calibration scale, wherein the information about the calibration scale comprises marker point information of the calibration scale;
2) reading a DICOM image that comprises the calibration scale and the marker points and is scanned by a CBCT or CT;
3) performing threshold segmentation on the DICOM image, and performing extraction to generate polygonal data;
4) filtering the polygonal data according to the read information about the calibration scale to obtain image marker points in the DICOM image;
5) calculating the distance between each two image marker points in the image respectively;
6) performing a preliminary match between the obtained image marker points and the scale marker points, and performing filtering and sorting of the image marker points to obtain a scale marker points vector and a corresponding one-to-one image marker points vector;
7) calculating a rotation matrix between the scale marker points vector and the image marker points vector, and calculating a residual error according to a calculation result of the rotation matrix; and
8) determining whether the residual error is less than a target error; if NOT, then going to step 6) to perform filtering and sorting again to obtain the scale marker points vector and the corresponding one-to-one image marker points vector; if YES, then outputting the scale marker points vector and the corresponding one-to-one image marker points vector of step 6) as a matching result;
wherein the scale marker points on the calibration scale are defined into two groups, i.e., group A and group B, respectively, so that there are three or more scale marker points in at least one of the group A and the group B, the step (6) of performing a preliminary match between the obtained image marker points and the scale marker points, and performing filtering and sorting of the image marker points to obtain the scale marker points vector and the corresponding one-to-one image marker points vector comprises the following contents:
6.1) if there are three or more scale marker points in the group A, performing a preliminary match on the group A with a specific process as follows, otherwise going to step 6.2):
6.1.1) creating a triangle with every three of all the scale marker points of the group A, and selecting one of the triangles created by all the scale marker points of the group A as a scale triangle template;
6.1.2) creating an image triangle with every three of the image marker points, and determining whether there is a triangle congruent to the scale triangle template in the image triangles according to the calculated distance between each two image marker points; if NOT, then outputting null, and going to step 6.2); if YES, then going to step 6.1.3);
6.1.3) obtaining, according to a correspondence between vertexes, vertexes of the scale triangle template and the image triangle that have been matched respectively, to create a congruent triangle matching point pair as matching marker point pair sequences, and numbering and storing the created matching marker point pair sequences;
6.1.4) selecting a point other than the scale marker points that create the scale triangle template in the group A as a target point, and searching, in the image obtained in the step 2), for an image marker point corresponding to the target point according to the image triangle matching the triangle template;
6.1.5) determining whether there is an image marker point corresponding to the target point; if NOT, then outputting the matching marker point pair sequences stored in the step 6.1.3); if YES, then going to step 6.1.6);
6.1.6) adding the target point and the image marker point corresponding thereto into the matching marker point pair sequences, and numbering and storing them;
6.1.7) determining whether there is a remaining scale marker point in the scale marker points of the group A; if NOT, then outputting all the stored matching marker point pair sequences; if YES, then going to the step 6.1.4);
6.2) if there are three or more scale marker points in the group B, performing a preliminary match on the group B with a specific process as follows, otherwise going to step 6.3):
6.2.1) creating a triangle with every three of all the scale marker points of the group B, and selecting one of the triangles created by all the scale marker points of the group B as a scale triangle template;
6.2.2) creating an image triangle with every three of the image marker points, and determining whether there is a triangle congruent to the scale triangle template in the image triangles according to the calculated distance between each two image marker points; if NOT, then outputting null, and going to step 6.4); if YES, then going to step 6.2.3);
6.2.3) obtaining, according to a correspondence between vertexes, vertexes of the scale triangle template and the image triangle that have been matched respectively, to create a congruent triangle matching point pair as matching marker point pair sequences, and numbering and storing the created matching marker point pair sequences;
6.2.4) selecting a point other than the scale marker points that create the scale triangle template in the group B as a target point, and searching, in the image obtained in the step 2), for an image marker point corresponding to the target point according to the image triangle matching the triangle template;
6.2.5) determining whether there is an image marker point corresponding to the target point; if NOT, then outputting the matching marker point pair sequences stored in the step 6.2.3); if YES, then going to step 6.2.6);
6.2.6) adding the target point and the image marker point corresponding thereto into the matching marker point pair sequences, and numbering and storing them;
6.2.7) determining whether there is a remaining scale marker point in the scale marker points of the group B; if NOT, then outputting all the stored matching marker point pair sequences; if YES, then going to the step 6.2.4);
6.3) storing all the matching marker points output by the group A and the group B respectively to form the scale marker points vector and the corresponding one-to-one image marker points vector, and storing and outputting them to the step 7);
6.4) determining whether both the group A and the group B output null; if only one of the group A and the group B outputs null, then going to step 6.5); if both output null, then going to step 6.7);
6.5) the operation steps in a case in which the group A does not output null and the group B outputs null being identical with the operation steps in a case in which the group B does not output null and the group A outputs null, both being searching in the image obtained in the step 2), according to the matching marker point pair sequences of the group that does not output null, for an image marker point corresponding to a scale marker point in the group that outputs null, and adding the matching point pairs into the matching marker point pair sequences, and going to step 6.6);
6.6) storing all the matching marker point pair sequences obtained in the step 6.5) respectively to form the scale marker points vector and the corresponding one-to-one image marker points vector, and storing and outputting them to the step 7);
6.7) arbitrarily selecting two or more scale marker points in all the scale marker points of the group A and the group B respectively to create a new group C comprising four or more scale marker points; performing a preliminary match on the group C according to the operation steps identical with those on the group A in the step 6.1) or those on the group B in the step 6.2); and storing all the obtained matching marker point pair sequences respectively to form the scale marker points vector and the corresponding one-to-one image marker points vector, and storing and outputting them to the step 7).

2. The method for automatically identifying a marker point sequence in a three-dimensional medical image according to claim 1, wherein in the step 6.5) wherein the operation steps in a case in which the group A does not output null and the group B outputs null are identical with the operation steps in a case in which the group B does not output null and the group A outputs null, both are implemented by means of a secondary matching and specifically comprises the following content:
6.5.1) selecting a pair of congruent triangles in the matching marker point pair sequences of the group that does not output null;
6.5.2) selecting a scale marker point in the group that outputs null as a to-be-matched point, and searching, according to the selected pair of congruent triangles, in the image obtained in the step 2) for an image marker point corresponding to the to-be-matched point;
6.5.3) determining whether there is a image marker point corresponding to the to-be-matched point; if NOT, then going to step 6.5.5); if YES, then going to step 6.5.4);
6.5.4) adding the to-be-matched point and the image marker point corresponding thereto into the matching marker point pair sequences, and numbering and storing them;
6.5.5) determining whether there is a remaining scale marker point in the group that outputs null; if YES, then going to the step 6.5.2) for circulation; if NOT, then outputting all the stored matching marker point pair sequences.

3. The method for automatically identifying a marker point sequence in a three-dimensional medical image according to claim 1, wherein in the step 6.5) wherein the operation steps in a case in which the group A does not output null and the group B outputs null are identical with the operation steps in a case in which the group B does not output null and the group A outputs null, both are implemented by means of a secondary matching and specifically comprises the following content:
6.5.1) selecting a pair of congruent triangles in the matching marker point pair sequences of the group that does not output null as a reference template;
6.5.2) selecting a scale marker point in the group that outputs null as a to-be-matched point, and determining, along with the reference template, whether there is an image marker point corresponding to the to-be-matched point in the image obtained in the step 2); if NOT, then going to step 6.5.4); if YES, then going to step 6.5.3);
6.5.3) adding the to-be-matched point and the image marker point corresponding thereto into the reference template, and adding them into the matching marker point pair sequences, so as to number and store them;
6.5.4) determining whether there is a remaining scale marker point in the group that outputs null; if YES, then going to the step 6.5.2) for circulation; if NOT, then outputting all the stored matching marker point pair sequences.

## Patentansprüche

1. Verfahren zur automatischen Identifizierung einer Sequenz von Markierungspunkten in einem dreidimensionalen medizinischen Bild, umfassend die folgenden Schritte:
1) Auswählen einer Kalibrierungsskala, die mindestens vier Markierungspunkte umfasst, und Lesen von Informationen über die ausgewählte Kalibrierungsskala, wobei die Informationen über die Kalibrierungsskala Markierungspunktinformationen der Kalibrierungsskala umfassen;
2) Lesen eines DICOM-Bilds, das die Kalibrierungsskala und die Markierungspunkte umfasst und von einem CBCT oder CT gescannt wird;
3) Durchführen einer Schwellenwertsegmentierung am DICOM-Bild, und Durchführen von Extraktion, um polygonale Daten zu erzeugen;
4) Filtern der polygonalen Daten gemäß den gelesenen Informationen über die Kalibrierungsskala, um Bildmarkierungspunkte im DICOM-Bild zu erhalten;
5) Berechnen des jeweiligen Abstands zwischen je zwei Markierungspunkten im Bild;
6) Durchführen einer vorläufigen Zuordnung zwischen den erhaltenen Bildmarkierungspunkten und den Skalenmarkierungspunkten, und Durchführen von Filtern und Sortieren der Bildmarkierungspunkte, um einen Skalenmarkierungspunktevektor und einen entsprechenden eineindeutigen Bildmarkierungspunktevektor zu erhalten;
7) Berechnen einer Drehmatrix zwischen dem Skalenmarkierungspunktevektor und dem Bildmarkierungspunktevektor, und Berechnen eines Restfehlers gemäß einem Berechnungsergebnis der Drehmatrix; und
8) Bestimmen, ob der Restfehler kleiner als ein Zielfehler ist; wenn NICHT, dann Übergehen zu Schritt 6), um Filtern und Sortieren erneut durchzuführen, um den Skalenmarkierungspunktevektor und den entsprechenden eineindeutigen Bildmarkierungspunktevektor zu erhalten; wenn JA, dann Ausgeben des Skalenmarkierungspunktevektors und des entsprechenden eineindeutigen Bildmarkierungspunktevektors von Schritt 6) als ein Zuordnungsergebnis;
wobei die Skalenmarkierungspunkte auf der Kalibrierungsskala jeweils derart in zwei Gruppen, d. h. Gruppe A und Gruppe B, definiert sind, dass es drei oder mehr Skalenmarkierungspunkte in mindestens einer der Gruppe A und der Gruppe B gibt, wobei der Schritt (6) des Durchführens einer vorläufigen Zuordnung zwischen den erhaltenen Bildmarkierungspunkten und den Skalenmarkierungspunkten, und Durchführen von Filtern und Sortieren der Bildmarkierungspunkte, um den Skalenmarkierungspunktevektor und den entsprechenden eineindeutigen Bildmarkierungspunktevektors zu erhalten, die folgenden Inhalte umfasst:
6.1) wenn es drei oder mehr Skalenmarkierungspunkte in der Gruppe A gibt, Durchführen einer vorläufigen Zuordnung an der Gruppe A mit einem spezifischen Prozess wie folgt, ansonsten Übergehen zu Schritt 6.2):
6.1.1) Erstellen eines Dreiecks mit je drei aller Skalenmarkierungspunkte der Gruppe A und Auswählen eines der von allen Skalenmarkierungspunkten der Gruppe A erstellten Dreiecke als eine Skalendreieckvorlage;
6.1.2) Erstellen eines Bilddreiecks mit je drei der Bildmarkierungspunkte und Bestimmen, gemäß dem berechneten Abstand zwischen je zwei Bildmarkierungspunkten, ob es in den Bilddreiecken ein zu der Skalendreieckvorlage kongruentes Dreieck gibt; wenn NICHT, dann Ausgeben von null und Übergehen zu Schritt 6.2); wenn JA, dann Übergehen zu Schritt 6.1.3);
6.1.3) Erhalten, gemäß einer Entsprechung zwischen Scheitelpunkten, von Scheitelpunkten der Skalendreieckvorlage und des Bilddreiecks, die jeweils zugeordnet wurden, um ein zugeordnetes Punktepaar kongruenter Dreiecke als Sequenzen zugeordneter Markierungspunktepaare zu erstellen, und Nummerieren und Speichern der erstellten Sequenzen zugeordneter Markierungspunktepaare;
6.1.4) Auswählen eines anderen Punkts als die Skalenmarkierungspunkte, die die Skalendreieckvorlage in der Gruppe A erstellen, als ein Zielpunkt, und Suchen, in dem im Schritt 2) erhaltenen Bild, eines Bildmarkierungspunkts, der dem Zielpunkt entspricht, gemäß dem Bilddreieck, das der Dreieckvorlage zugeordnet ist;
6.1.5) Bestimmen, ob es einen Bildmarkierungspunkt gibt, der dem Zielpunkt entspricht; wenn NICHT, dann Ausgeben der Sequenzen zugeordneter Markierungspunktepaare, die im Schritt 6.1.3) gespeichert werden; wenn JA, dann Übergehen zu Schritt 6.1.6);
6.1.6) Addieren des Zielpunkts und des Bildmarkierungspunkts, der diesem entspricht, zu den Sequenzen zugeordneter Markierungspunktepaare, und Nummerieren und Speichern dieser;
6.1.7) Bestimmen, ob es einen verbleibenden Skalenmarkierungspunkt in den Skalenmarkierungspunkten der Gruppe A gibt; wenn NICHT, dann Ausgeben aller gespeicherten Sequenzen zugeordneter Markierungspunktepaare; wenn JA, dann Übergehen zum Schritt 6.1.4);
6.2) wenn es es drei oder mehr Skalenmarkierungspunkte in der Gruppe B gibt, Durchführen einer vorläufigen Zuordnung an der Gruppe B mit einem spezifischen Prozess wie folgt, ansonsten Übergehen zu Schritt 6.3):
6.2.1) Erstellen eines Dreiecks mit je drei aller Skalenmarkierungspunkte der Gruppe B und Auswählen eines der von allen Skalenmarkierungspunkten der Gruppe B erstellten Dreiecke als eine Skalendreieckvorlage;
6.2.2) Erstellen eines Bilddreiecks mit je drei der Bildmarkierungspunkte und Bestimmen, gemäß dem berechneten Abstand zwischen je zwei Bildmarkierungspunkten, ob es in den Bilddreiecken ein zu der Skalendreieckvorlage kongruentes Dreieck gibt; wenn NICHT, dann Ausgeben von null und Übergehen zu Schritt 6.4), wenn JA, dann Übergehen zu Schritt 6.2.3);
6.2.3) Erhalten, gemäß einer Entsprechung zwischen Scheitelpunkten, von Scheitelpunkten der Skalendreieckvorlage und des Bilddreiecks, die jeweils zugeordnet wurden, um ein zugeordnetes Punktepaar kongruenter Dreiecke als Sequenzen zugeordneter Markierungspunktepaare zu erstellen, und Nummerieren und Speichern der erstellten Sequenzen zugeordneter Markierungspunktepaare;
6.2.4) Auswählen eines anderen Punkts als die Skalenmarkierungspunkte, die die Skalendreieckvorlage in der Gruppe B erstellen, als ein Zielpunkt, und Suchen, in dem im Schritt 2) erhaltenen Bild, eines Bildmarkierungspunkts, der dem Zielpunkt entspricht, gemäß dem Bilddreieck, das der Dreieckvorlage zugeordnet ist;
6.2.5) Bestimmen, ob es einen Bildmarkierungspunkt gibt, der dem Zielpunkt entspricht; wenn NICHT, dann Ausgeben der Sequenzen zugeordneter Markierungspunktepaare, die im Schritt 6.2.3) gespeichert werden; wenn JA, dann Übergehen zu Schritt 6.2.6);
6.2.6) Addieren des Zielpunkts und des Bildmarkierungspunkts, der diesem entspricht, zu den Sequenzen zugeordneter Markierungspunktepaare, und Nummerieren und Speichern dieser;
6.2.7) Bestimmen, ob es einen verbleibenden Skalenmarkierungspunkt in den Skalenmarkierungspunkten der Gruppe B gibt; wenn NICHT, dann Ausgeben aller gespeicherten Sequenzen zugeordneter Markierungspunktepaare; wenn JA, dann Übergehen zum Schritt 6.2.4);
6.3) Speichern aller jeweils von der Gruppe A und der Gruppe B ausgegebenen zugeordneten Markierungspunkte, um den Skalenmarkierungspunktevektor und den entsprechenden eineindeutigen Bildmarkierungspunktevektor zu bilden, und Speichern und Ausgeben dieser zum Schritt 7);
6.4) Bestimmen, ob sowohl die Gruppe A als auch die Gruppe B null ausgeben; wenn nur eine der Gruppe A und der Gruppe B null ausgibt; dann Übergehen zu Schritt 6.5); wenn beide null ausgeben, dann Übergehen zu Schritt 6.7);
6.5) wobei die Operationsschritte in einem Fall, bei dem die Gruppe A nicht null ausgibt und die Gruppe B null ausgibt, identisch sind mit den Operationsschritten in einem Fall, bei dem die Gruppe B nicht null ausgibt und die Gruppe A null ausgibt, wobei es sich bei beiden handelt um Suchen, in dem im Schritt 2) erhaltenen Bild, gemäß den Sequenzen zugeordneter Markierungspunktepaare der Gruppe, die nicht null ausgibt, eines Bildmarkierungspunkts, der einem Skalenmarkierungspunkt in der Gruppe entspricht, die null ausgibt, und Addieren der zugeordneten Punktepaare zu den Sequenzen zugeordneter Markierungspunktepaare, und Übergehen zu Schritt 6.6);
6.6) Speichern aller jeweils im Schritt 6.5) erhaltenen Sequenzen zugeordneter Markierungspunktepaare, um den Skalenmarkierungspunktevektor und den entsprechenden eineindeutigen Bildmarkierungspunktevektor zu bilden, und Speichern und Ausgeben dieser zum Schritt 7);
6.7) beliebiges Auswählen von zwei oder mehr Skalenmarkierungspunkten in allen Skalenmarkierungspunkten jeweils der Gruppe A und der Gruppe B, um eine neue Gruppe C zu erstellen, die vier oder mehr Skalenmarkierungspunkte umfasst; Durchführen einer vorläufigen Zuordnung an der Gruppe C gemäß den Operationsschritten, die identisch sind mit jenen an der Gruppe A im Schritt 6.1) oder jenen an der Gruppe B im Schritt 6.2) und Speichern aller jeweils erhaltenen Sequenzen zugeordneter Markierungspunktepaare, um den Skalenmarkierungspunktevektor und den entsprechenden eineindeutigen Bildmarkierungspunktevektor zu bilden, und Speichern und Ausgeben dieser zum Schritt 7).

2. Verfahren zur automatischen Identifizierung einer Sequenz von Markierungspunkten in einem dreidimensionalen medizinischen Bild nach Anspruch 1, wobei im Schritt 6.5), wobei die Operationsschritte in einem Fall, bei dem die Gruppe A nicht null ausgibt und die Gruppe B null ausgibt, identisch sind mit den Operationsschritten in einem Fall, bei dem die Gruppe B nicht null ausgibt und die Gruppe A null ausgibt, beide mittels einer Hilfszuordnung implementiert werden und spezifisch den folgenden Inhalt umfassen:
6.5.1) Auswählen eines Paars kongruenter Dreiecker in den Sequenzen zugeordneter Markierungspunktepaare der Gruppe, die nicht null ausgibt;
6.5.2) Auswählen eines Skalenmarkierungspunkts in der Gruppe, die null ausgibt, als einen zuzuordnenden Punkt, und Suchen, gemäß dem ausgewählten Paar kongruenter Dreiecke, im Bild, das im Schritt 2) erhalten wird, eines Bildmarkierungspunkts, der dem zuzuordnenden Punkt entspricht;
6.5.3) Bestimmen, ob es einen Bildmarkierungspunkt gibt, der dem zuzuordnenden Punkt entspricht; wenn NICHT, dann Übergehen zu Schritt 6.5.5); wenn JA, dann Übergehen zu Schritt 6.5.4);
6.5.4) Addieren des zuzuordnenden Punkts und des Bildmarkierungspunkts, der diesem entspricht, zu den Sequenzen zugeordneter Markierungspunktepaare, und Nummerieren und Speichern dieser;
6.5.5) Bestimmen, ob es in der Gruppe, die null ausgibt, einen verbleibenden Skalenmarkierungspunkt gibt; wenn JA, dann Übergehen zum Schritt 6.5.2) zur Zirkulation; wenn NICHT, dann Ausgeben aller gespeicherten Sequenzen zugeordneter Markierungspunktepaare.

3. Verfahren zur automatischen Identifizierung einer Sequenz von Markierungspunkten in einem dreidimensionalen medizinischen Bild nach Anspruch 1, wobei im Schritt 6.5), wobei die Operationsschritte in einem Fall, bei dem die Gruppe A nicht null ausgibt und die Gruppe B null ausgibt, identisch sind mit den Operationsschritten in einem Fall, bei dem die Gruppe B nicht null ausgibt und die Gruppe A null ausgibt, beide mittels einer Hilfszuordnung implementiert werden und spezifisch den folgenden Inhalt umfassen:
6.5.1) Auswählen eines Paars kongruenter Dreiecke in den Sequenzen zugeordneter Markierungspunktepaare der Gruppe, die nicht null ausgibt, als eine Referenzvorlage;
6.5.2) Auswählen eines Skalenmarkierungspunkts in der Gruppe, die null ausgibt, als einen zuzuordnenden Punkt, und Bestimmen, zusammen mit der Referenzvorlage, ob es einen Bildmarkierungspunkt gibt, der dem zuzuordnenden Punkt in dem im Schritt 2) erhaltenen Bild entspricht; wenn NICHT, dann Übergehen zu Schritt 6.5.4), wenn JA, dann Übergehen zu Schritt 6.5.3);
6.5.3) Addieren des zuzuordnenden Punkts und des Bildmarkierungspunkts, der diesem entspricht, zur Referenzvorlage, und Addieren dieser zu den Sequenzen zugeordneter Markierungspunktepaare, um diese so zu nummerieren und zu speichern;
6.5.4) Bestimmen, ob es in der Gruppe, die null ausgibt, einen verbleibenden Skalenmarkierungspunkt gibt; wenn JA, dann Übergehen zum Schritt 6.5.2) zur Zirkulation; wenn NICHT, dann Ausgeben aller gespeicherten Sequenzen zugeordneter Markierungspunktepaare.

## Revendications

1. Procédé pour identifier automatiquement une séquence de points de marquage dans une image médicale tridimensionnelle, comprenant les étapes suivantes :
1) sélection d'une échelle d'étalonnage comprenant au moins quatre points de marquage et lecture d'informations concernant l'échelle d'étalonnage sélectionnée, dans lesquelles les informations concernant l'échelle d'étalonnage comprennent des informations de point de marquage de l'échelle d'étalonnage ;
2) lecture d'une image DICOM qui comprend l'échelle d'étalonnage et les points de marquage et qui est parcourue par une tomodensitométrie à faisceau conique CBCT ou une tomodensitométrie CT ;
3) exécution d'une segmentation par seuil sur l'image DICOM et exécution d'une extraction pour produire des données polygonales ;
4) filtrage des données polygonales selon les informations lues concernant l'échelle d'étalonnage pour obtenir des points de marquage d'image dans l'image DICOM ;
5) calcul de la distance entre chaque groupe de deux points de marquage d'image dans l'image, respectivement ;
6) exécution d'une concordance préliminaire entre les points de marquage d'image obtenus et les points de marquage d'échelle et l'exécution d'un filtrage et d'un triage des points de marquage d'image pour obtenir un vecteur de points de marquage d'échelle et un vecteur de points de marquage d'image à correspondance univoque ;
7) calcul d'une matrice de rotation entre le vecteur de points de marquage d'échelle et le vecteur de points de marquage d'image, et calcul d'une erreur résiduelle selon un résultat de calcul de la matrice de rotation ; et
8) détermination si l'erreur résiduelle est inférieure à une erreur cible ; si NON, aller ensuite à l'étape 6) pour effectuer de nouveau un filtrage et un tri pour obtenir le vecteur de points de marquage d'échelle et le vecteur de points de marquage d'image à correspondance univoque ; si OUI, alors sortie du vecteur de points de marquage d'échelle et du vecteur de points de marquage d'image à correspondance univoque de l'étape 6) en tant que résultat concordant ;
dans lequel les points de marquage d'échelle sur l'échelle d'étalonnage sont définis en deux groupes, c'est-à-dire, respectivement un groupe A et un groupe B, de sorte qu'il y a trois points de marquage d'échelle ou plus dans au moins l'un du groupe A et du groupe B, l'étape (6) d'exécution d'une concordance préliminaire entre les points de marquage d'image obtenus et les points de marquage d'échelle et d'exécution d'un filtrage et d'un tri des points de marquage d'image pour obtenir le vecteur de points de marquage d'échelle et le vecteur de points de marquage d'image à correspondance univoque comprend ce qui suit :
6.1) s'il y a trois points de marquage d'échelle ou plus dans le groupe A, exécution d'une concordance préliminaire sur le groupe A avec un processus spécifique comme suit, autrement aller à l'étape 6.2) :
6.1.1) création d'un triangle avec chaque groupe de trois de tous les points de marquage d'échelle du groupe A et sélection de l'un des triangles créés par tous les points de marquage d'échelle du groupe A en tant que modèle de triangle d'échelle ;
6.1.2) création d'un triangle d'image avec chaque groupe de trois des points de marquage d'image, et détermination s'il y a un triangle congruent au modèle de triangle d'échelle dans les triangles d'image selon la distance calculée entre chaque groupe de deux points de marquage d'image ; si NON, alors sortie nulle et aller à l'étape 6.2); si OUI, alors aller à l'étape 6.1.3) ;
6.1.3) obtention, selon une correspondance entre des sommets, des sommets du modèle de triangle d'échelle et du triangle d'image qui ont respectivement concordé, pour créer un couple de points de concordance de triangle congruent en tant que séquences de couples de points de marquage concordants, et comptage et stockage des séquences de couples de points de marquage concordants créées ;
6.1.4) sélection d'un point d'autre que les points de marquage d'échelle qui créent le modèle de triangle d'échelle dans le groupe A en tant que point cible, et recherche, dans l'image obtenue dans l'étape 2), d'un point de marquage d'image correspondant au point cible selon le triangle d'image concordant avec le modèle de triangle ;
6.1.5) détermination s'il y a un point de marquage d'image correspondant au point cible ; si NON, alors sortie des séquences de couples de points de marquage concordants stockées dans l'étape 6.1.3) ; si OUI, alors aller à l'étape 6.1.6) ;
6.1.6) ajout du point cible et du point de marquage d'image correspondant à celui-ci dans les séquences de couples de points de marquage concordante, et leur comptage et stockage ;
6.1.7) détermination s'il y a un point de marquage d'échelle restant dans les points de marquage d'échelle du groupe A; si NON, alors sortie de toutes les séquences de couples de points de marquage concordants stockées ; si OUI, alors aller à l'étape 6.1.4) ;
6.2) s'il y a trois points de marquage d'échelle ou plus dans le groupe B, exécution d'une concordance préliminaire sur le groupe B avec un processus spécifique comme suit, autrement aller à l'étape 6.3) ;
6.2.1) création d'un triangle avec chaque groupe de trois de tous les points de marquage d'échelle du groupe B et sélection de l'un des triangles créés par tous les points de marquage d'échelle du groupe B en tant que modèle de triangle d'échelle ;
6.2.2) création d'un triangle d'image avec chaque groupe de trois des points de marquage d'image et détermination s'il y a un triangle congruent au modèle de triangle d'échelle dans les triangles d'image selon la distance calculée entre chaque groupe de deux points de marquage d'image ; si NON, alors sortie nulle, et aller à l'étape 6.4) ; si OUI, alors aller à l'étape 6.2.3) ;
6.2.3) obtention, selon une correspondance entre des sommets, des sommets du modèle de triangle d'échelle et du triangle d'image qui ont respectivement concordé, pour créer un couple de points concordants de triangle congruent en tant que séquences de couples de points de marquage concordants, et comptage et stockage des séquences de couples de points de marquage concordants créées ;
6.2.4) sélection d'un point autre que les points de marquage d'échelle qui créent le modèle de triangle d'échelle dans le groupe B en tant que point cible, et recherche, dans l'image obtenue dans l'étape 2), d'un point de marquage d'image correspondant au point cible selon le triangle d'image concordant au modèle de triangle ;
6.2.5) détermination s'il y a un point de marquage d'image correspondant au point cible ; si NON, alors sortie des séquences de couples de points de marquage concordants stockées dans l'étape 6.2.3) ; si OUI, alors aller à l'étape 6.2.6) ;
6.2.6) ajout du point cible et du point de marquage d'image correspondant à celui-ci dans les séquences de couples de points de marquage concordants et leur comptage et stockage ;
6.2.7) détermination s'il y a un point de marquage d'échelle restant dans les points de marquage d'échelle du groupe B ; si NON, alors sortie de toutes les séquences de couples de points de marquage concordants stockées ; si OUI, alors aller à l'étape 6.2.4) ;
6.3) stockage de tous les points de marquage concordants sortis par le groupe A et le groupe B respectivement pour former le vecteur de points de marquage d'échelle et du vecteur de points de marquage d'image à correspondance univoque, et leur stockage et sortie à l'étape 7) ;
6.4) détermination si tant le groupe A que le groupe B sortent nuls ; si seulement l'un du groupe A et du groupe B sort nul, alors aller à l'étape 6.5) ; si les deux sortent nuls, alors aller à l'étape 6.7) ;
6.5) les étapes de mise en œuvre dans un cas dans lequel le groupe A ne sort pas nul et le groupe B sort nul étant identique avec les étapes de mise en œuvre dans un cas dans lequel le groupe B ne sort pas nul et le groupe A sort nul, les deux recherchant dans l'image obtenue dans l'étape 2), selon les séquences de couples de points de marquage concordants du groupe qui ne sort pas nul, pour un point de marquage d'image correspondant à un point de marquage d'échelle dans le groupe qui sort nul, et ajout des couples de points concordants dans les séquences de couples de points de marquage concordants, et aller à l'étape 6.6) ;
6.6) stockage de toutes les séquences de couples de points de marquage concordants obtenues dans l'étape 6.5) respectivement pour former le vecteur de points de marquage d'échelle et le vecteur de points de marquage d'image à correspondance univoque, et leur stockage et sortie à l'étape 7) ;
6.7) arbitrairement sélection de deux points de marquage d'échelle ou plus dans tous les points de marquage d'échelle du groupe A et du groupe B respectivement pour créer un nouveau groupe C comprenant quatre points de marquage d'échelle ou plus ; exécution d'une concordance préliminaire sur le groupe C selon les étapes de mise en œuvre identiques à celles sur le groupe A dans l'étape 6.1) ou celles sur le groupe B dans l'étape 6.2) ; et stockage de toutes les séquences de couples de points de marquage concordants obtenues respectivement pour former le vecteur de points de marquage d'échelle et le vecteur de points de marquage d'image à correspondance univoque, et leur stockage et sortie à l'étape 7).

2. Procédé pour identifier automatiquement une séquence de points de marquage dans une image médicale tridimensionnelle selon la revendication 1, dans lequel dans l'étape 6.5) dans laquelle les étapes de mise en œuvre dans un cas dans lequel le groupe A ne sort pas nul et le groupe B sort nul sont identiques aux étapes de mise en œuvre dans un cas dans lequel le groupe B ne sort pas nul et le groupe A sort nul, les deux sont mis en œuvre au moyen d'une concordance secondaire et comprend de manière spécifique le contenu suivant :
6.5.1) sélection d'un couple de triangles congruents dans les séquences de couples de points de marquage concordants du groupe qui ne sort pas nul;
6.5.2) sélection d'un point de marquage d'échelle dans le groupe qui sort nul en tant que point à rendre concordant, et recherche, selon le couple sélectionné de triangles congruents, dans l'image obtenue dans l'étape 2) pour un point de marquage d'image correspondant au point à rendre concordant ;
6.5.3) détermination s'il y a un point de marquage d'image correspondant au point à rendre concordant ; si NON, alors aller ensuite à l'étape 6.5.5) ; si OUI, alors aller à l'étape 6.5.4) ;
6.5.4) ajout du point à rendre concordant et du point de marquage d'image correspondant à celui-ci dans les séquences de couples de points de marquage concordants, et leur comptage et stockage ;
6.5.5) détermination s'il y a un point de marquage d'échelle restant dans le groupe qui sort nul ; si OUI, alors aller à l'étape 6.5.2) pour circulation ; si NON, alors sortie de toutes les séquences de couples de points de marquage concordants stockées.

3. Procédé pour identifier automatiquement une séquence de points de marquage dans une image médicale tridimensionnelle selon la revendication 1, dans lequel dans l'étape 6.5) dans laquelle les étapes de mise en œuvre dans un cas dans lequel le groupe A ne sort pas nul et le groupe B sort nul sont identiques aux étapes de mise en œuvre dans un cas dans lequel le groupe B ne sort pas nul et le groupe A sort nul, les deux sont mis en œuvre au moyen d'une concordance secondaire et comprend de manière spécifique le contenu suivant :
6.5.1) sélection d'un couple de triangles congruents dans les séquences de couples de points de marquage concordants du groupe qui ne sort pas nul en tant que modèle de référence ;
6.5.2) sélection d'un point de marquage d'échelle dans le groupe qui sort nul en tant que point à rendre concordant, et détermination, en même temps que le modèle de référence, s'il y a un point de marquage d'image correspondant au point à rendre concordant dans l'image obtenue dans l'étape 2) ; si NON, alors aller à l'étape 6.5.4) ; si OUI, alors aller à l'étape 6.5.3) ;
6.5.3) ajout du point à rendre concordant et du point de marquage d'image correspondant à celui-ci dans le modèle de référence, et leur ajout dans les séquences de couples de points de marquage concordants, afin de les compter et stocker ;
6.5.4) détermination s'il y a un point de marquage d'échelle restant dans le groupe qui sort nul ; si OUI, alors aller à l'étape 6.5.2) pour circulation ; si NON, alors sortie de toutes les séquences de couples de points de marquage concordants stockées.
